(19) Europäisches Patentamt / European Patent Office / Office européen des brevets

(11) **EP 3 285 386 B1**

(12) **EUROPEAN PATENT SPECIFICATION**

(45) Date of publication and mention
of the grant of the patent:
**28.04.2021 Bulletin 2021/17**

(51) Int Cl.:
**H02M 5/297** (2006.01)     *H02M 1/12* (2006.01)

(21) Application number: **17185806.1**

(22) Date of filing: **10.08.2017**

(54) **MATRIX DIRECT AC/AC CONVERTER**

MATRIXGLEICHSTROM-WECHSELSTROMWANDLER

CONVERTISSEUR COURANT ALTERNATIF/COURANT ALTERNATIF DIRECT À MATRICE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.08.2016 IT 201600084411**

(43) Date of publication of application:
**21.02.2018 Bulletin 2018/08**

(73) Proprietor: **Phase Motion Control S.p.A.**
**16154 Genova (IT)**

(72) Inventor: **CALVINI, Marco**
**16141 Genova (IT)**

(74) Representative: **Bergadano, Mirko et al**
**Studio Torta S.p.A.**
**Via Viotti, 9**
**10121 Torino (IT)**

(56) References cited:
**US-A- 4 833 588**

• **William Shepherd ET AL: "14: Matrix Converters" In: "Power Converter Circuits", 1 January 2004 (2004-01-01), Marcel Dekker Inc., U.S.A., XP055273629, ISBN: 978-0-8247-5054-1 pages 416-445, * paragraph [14.4.1.4]; figure 7 ***
• **JUN-KOO KANG ET AL: "Common-mode voltage characteristics of matrix converter-driven AC machines", CONFERENCE RECORD OF THE 2005 IEEE INDUSTRY APPLICATIONS CONFERENCE FORTIETH IAS ANNUAL MEETING 2-6 OCT. 2005 KOWLOON, HONG KONG, CHINA, IEEE, CONFERENCE RECORD OF THE 2005 IEEE INDUSTRY APPLICATIONS CONFERENCE FORTIETH IAS ANNUAL MEETING (IEEE CAT., vol. 4, 2 October 2005 (2005-10-02), pages 2382-2387, XP010842742, DOI: 10.1109/IAS.2005.1518794 ISBN: 978-0-7803-9208-3**
• **YOUNG-DOO YOON ET AL: "Carrier-Based Modulation Technique for Matrix Converter", IEEE TRANSACTIONS ON POWER ELECTRONICS, INSTITUTE OF ELECTRICAL AND ELECTRONICS ENGINEERS, USA, vol. 20, no. 6, 1 November 2006 (2006-11-01), pages 1691-1703, XP011150103, ISSN: 0885-8993**

**Description**

The present invention relates to a matrix direct AC/AC converter.

In particular, the present invention finds advantageous, though non-exclusive, application in the control of variable-speed three-phase AC motors, to which the ensuing description will make explicit reference, without implying any loss of generality.

In general, an AC/AC converter converts AC electric power at a certain frequency and a certain voltage amplitude into AC electric power at another frequency and another voltage amplitude. Typically, an AC/AC converter is used for converting electric power from a frequency ranging between 50 and 60 Hz to a frequency ranging or variable in a frequency range between 0 and 1200 Hz. The most desired characteristic of an AC/AC converter is that of generating a voltage with arbitrary amplitude and frequency for any electrical load, at the same time maintaining a unit power factor on the power-supply mains.

A three-phase AC/AC converter is designed to be connected between the phases of a three-phase input line, for example the three-phase power mains, and the phases of a three-phase output line, for example the supply line of a three-phase AC motor.

A matrix direct AC/AC converter typically comprises nine electronic two-way switching devices, which are arranged so as to connect, one by one, all the input phases with all the output phases, according, precisely, to the principle of a two-dimensional matrix, and a control device, that generates PWM signals for controlling accordingly the switching devices in such a way as to obtain on the output phases voltages and currents with sinusoidal waveforms.

The European patent No. EP146032B1 describes a matrix direct AC/AC converter in which the control device generates PWM signals such as to generate, on the three-phase output line, a so-called homopolar voltage component, which does not alter the waveform of the concatenated output voltages, which are the voltages that are applied to an AC motor, but regulates the amplitude thereof with respect to a hypothetical external potential reference, which is assumed as being the centre hub of the three-phase supply voltage, i.e., the ground potential. The homopolar component is also known as "common-mode component" or "third-harmonic component", in so far as it has a frequency that is typically three times that of the concatenated output voltages.

The AC/AC converter described in the patent EP146032B1 is not efficient from the energy standpoint. The energy losses may be substantially divided into two categories: conduction losses and switching losses. Conduction losses are due to the voltage drop across the electronic switching devices. In the case of electronic switches constituted by IGBTs, the voltage drop at output from the IGBT does not vary sensibly as the output current of the IGBT varies, and hence the conduction losses are substantially proportional to the output current of the IGBT. Switching losses are due to switching between the conductive state ("ON") and the resistive state ("OFF") of the IGBT and are substantially proportional to the output current of the IGBT, to the frequency of the PWM control signal, and to the square of the voltage amplitude corresponding to each PWM switching.

A book of William Shepherd et al., titled "Power Converter Circuits", published in 2004 by Marcel Dekker Inc., describes matrix converters at chapter 14. Particularly, section 14.3 of the book discloses a basic circuit of a three-phase matrix converter and block diagram of an experimental matrix converter system, wherein nine PWM signals, generated within a programmable controller, are fed to switch sequencer circuits via pairs of differential line driver receivers. In the switch sequencers the PWM signals are logically combined with current direction signals to produce eighteen gating signals. Isolated gate driver circuits then convert the gating signals to appropriate drive signals capable of turning the power switches on or off. Each power circuit is protected by a voltage clamp circuit. A zero crossing detector is used to synchronize to the input voltage controller signals. According to section 14.4.1.4 of the book, the desired reference-phase voltages should ensure that the maximum output-to-input voltage transfer ratio is obtained without adding low-order harmonics into the resultant output voltages. To achieve this, the reference output voltage waveform to be synthesized must, at any time, remain within an envelope formed by the three-phase input voltages. The area within the input voltage envelope may be enlarged by subtracting the common-mode, third harmonic of the input frequency from the input phase-to-neutral voltages. This procedure is equivalent to adding the third harmonics of the input frequency to the target output-phase voltage.

U.S. Patent No. 4,833,588 discloses a direct AC to AC converter system, wherein the normal rectifier assistance functions are phase modulated by a 30° lag and by a 30° lead, and switching between lagging and leading function is effected at a high frequency according to a duty cycle T which is a function of the electrical angle θ of the AC power as follow:

$$T = \cos(\Phi - \pi/3)/\cos(\Phi),$$

$$\Phi = \{(\theta + \pi/6) - \pi/6\} \bmod \pi/3,$$

thereby insuring a sinusoidal input current in the system.

A paper of Jun-koo Kang et al. , titled "Commond-Mode Voltage Characteristics of Matrix Converter-Driven AC Machines", published by Conference record of the 2005 IEEE Industry Applications Conference Fortieth IAS Annual Meeting, investigates common-mode voltage characteristics induced by PWM switching of a three-phase matrix converter. The matrix converter has twenty seven output voltage vectors available and different common-mode voltage patterns exist even with the same line-to-line output voltages. High common-mode dv/dt contributes high leakage currents to the ground through the parasitic capacitances. Since output voltage vectors can be grouped according to the magnitude of common-mode voltage, PWM patterns should be designed to select the low common-mode voltage vector groups satisfying the requirement of output voltages and input currents. The paper illustrates practical PWM patterns of matrix converter and their common-mode voltage characteristics, proposes a PWM method considering both low common-mode voltage and low dv/dt in the PWM pattern and compares the results with the data obtained by the Voltage Source Inverter (VSI).

A paper of Young-Doo Yoon et al., titled "Carrier-Based Modulation Technique for Matrix Converter", published in 2006 by IEEE TRANSACTIONS ON POWER ELECTRONICS, Vol. 21, No. 6, discloses a carrier-based modulation method for a matrix converter. By using the offset voltage and changing the slope of the carrier, it is possible to synthesize the sinusoidal input currents with the unity power factor and desired output voltages. The proposed method is equivalent to the so called space vector pulse-width modulation method. The paper presents two-phase or three-phase modulation method and dynamic/steady-state over-modulation method for the matrix converter. These methods are well developed in the study of a VSI. The steady-state over-modulation method is capable to synthesize the fundamental component of output voltage to be equal to that of input voltage at the cost of some distortion of input current. The feasibility of the proposed modulation method has been verified by a computer simulation and experimental results, which show that the proposed carrier-based modulation method can be implemented easily without any table.

The aim of the present invention is to provide a matrix direct AC/AC converter that will present reduced energy losses and, at the same time, will be easy and inexpensive to produce.

According to the present invention, a matrix direct AC/AC converter is provided according to what is defined in the annexed claims.

The present invention will now be described with reference to the annexed drawings, which illustrate a non-limiting example of embodiment thereof and in which:

- Figure 1 illustrates a block diagram of a matrix direct AC/AC converter;
- Figure 2 illustrates one of a plurality of electronic switching devices of the converter of Figure 1;
- Figure 3 illustrates a block diagram of a control device of the converter of Figure 1 provided according to the teachings of the present invention;
- Figures 4, 6, and 7 illustrate respective block diagrams of as many functional blocks of the control device of Figure 3;
- Figure 5 illustrates a simulation of the time plot of a pair of internal signals of the control device of Figure 3; and
- Figure 8 illustrates a simulation of the time plot of a phase output voltage with respect to the centre hub of the converter of Figure 1.

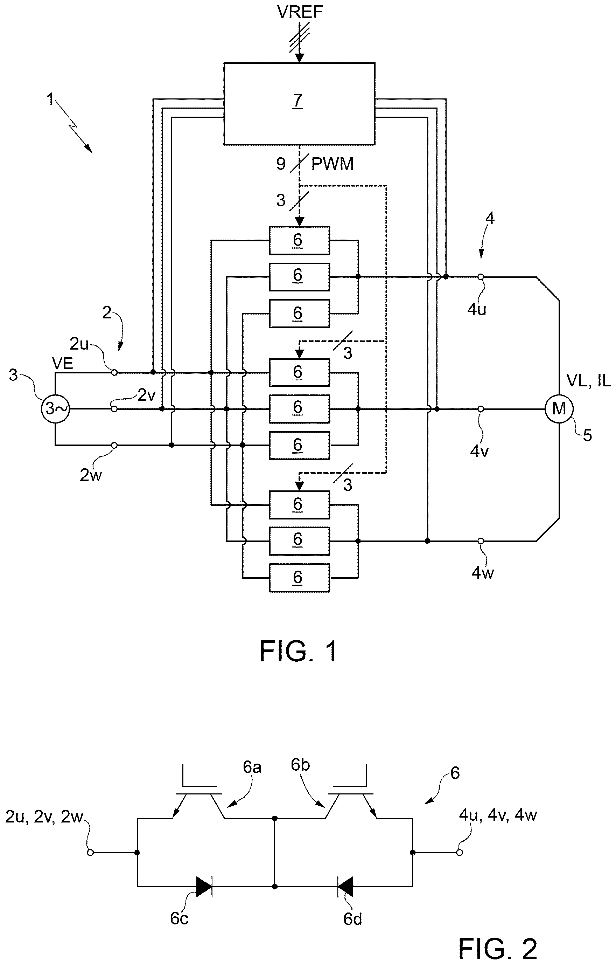

In Figure 1, designated as a whole by 1 is a matrix direct AC/AC converter, referred to hereinafter simply as "matrix converter". The matrix converter 1 comprises: a three-phase input 2, the three phase terminals of which, designated by 2u, 2v, and 2w, can be connected to a three-phase AC source 3, which is constituted, for example, by a three-phase power mains designed to supply a three-phase sinusoidal voltage with a quadratic-mean value equal to 400 V and a frequency equal to 50 Hz; a three-phase output 4, the three phase terminals of which, designated by 4u, 4v, and 4w, can be connected to a three-phase AC motor 5 for supplying to the latter a three-phase AC voltage having, for example, a quadratic-mean value equal to 200 V and a frequency equal to 400 Hz; nine electronic two-way switching devices 6, which are arranged so as to connect each of the three terminals of the three-phase input 2 with all three terminals of the three-phase output 4, according to the principle of a two-dimensional matrix; and a control device 7, which is designed to generate nine control signals of a pulse-width-modulated type, which are designated as a whole by PWM in Figure 1 and are designed to control accordingly the switching devices 6 in such a way as to obtain on the terminals of the three-phase output 4 sinusoidal voltages and currents.

The control device 7 is connected to the three-phase input 2 for measuring the three phase voltages of the three-phase input voltage, which is designated as a whole by VE in Figure 1, and to the three-phase output 4 for measuring the load currents on the three phases, i.e., the phase currents absorbed by the motor 5, which are designated as a whole by IL in Figure 1. The three-phase output voltage applied to the motor 5 is designated as a whole by VL. Moreover, the control device 7 receives a three-phase reference voltage VREF from a motor control system, which is in itself known and is hence not illustrated. The three-phase reference voltage VREF represents the optimal three-phase voltage, with amplitude and frequency regulated by the motor control system, that is to be applied to the motor 5 for obtaining the desired rotational speed and torque. In other words, the reference voltage VREF represents the desired three-phase output voltage. The control device 7 is configured for processing the three-phase reference voltage VREF, together with the measured values of the input voltages VE and of the load currents IL, in order to generate the control signals PWM to be applied to the control inputs of the switching devices 6, as will be explained in detail in the sequel of the present document.

With reference to Figure 2, each two-way switching device 6 is of a substantially known type and is advantageously constituted by two IGBTs 6a and 6b connected in antiseries and provided with respective diodes 6c and 6d arranged in antiparallel configuration. The gate terminals of both of the IGBTs 6a and 6b are substantially controlled by one and the same PWM signal, short of minor delays generated in a known way for optimizing switching of the two-way switch 6.

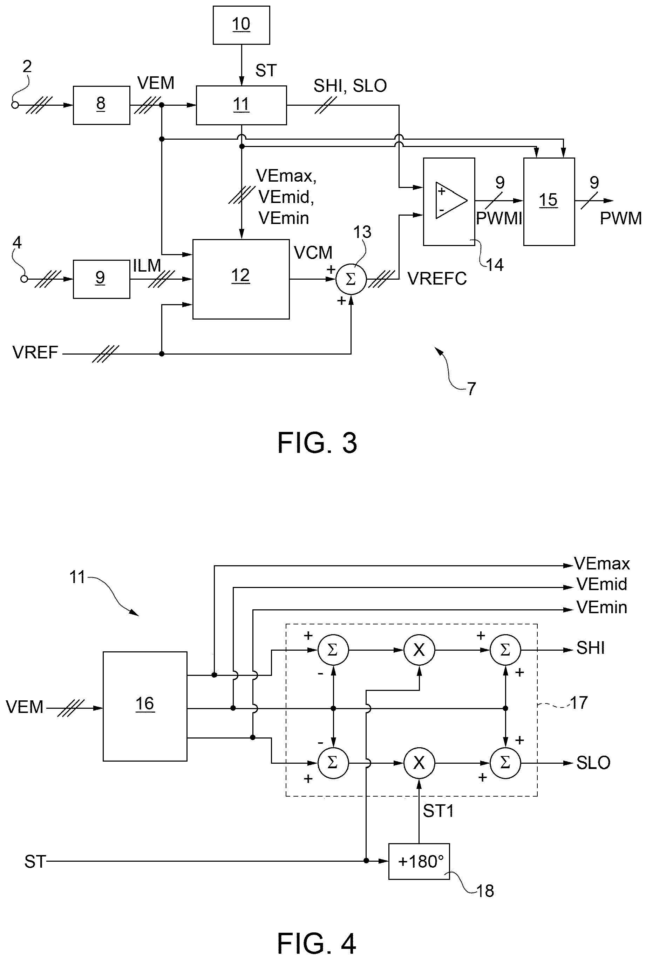

With reference to Figure 3, the control device 7 comprises a first measuring block 8 connected to the three-phase input 2 for supplying measured values of the intensity of the phase input voltages in the form of triads of sampled voltage values (one sample for each phase), which are designated as a whole by VEM, and a second measuring block 9, connected to the three-phase output 4, for supplying measured values of the intensity of the load phase currents, which are also in the form of triads of sampled current values (one sample for each phase) and are designated as a whole by ILM. Hence, the measured values VEM are measured values of the intensity of the three-phase input voltage VE, and the measured values ILM are measured values of the intensity of the three-phase load current IL. The control device 7 further comprises a plurality of functional blocks, which are described in detail hereinafter and to a large extent are preferably implemented via an FPGA device.

The control device 7 comprises a signal generator 10 for generating a unit triangular signal ST, i.e., a signal with triangular waveform with unit amplitude and a frequency typically ranging between 2 and 16 kHz, and a signal-conditioning block 11, which processes the measured values VEM in such a way as to supply a maximum-voltage signal VEmax, an intermediate-voltage signal VEmid, and a minimum-voltage signal VEmin, which represent the maximum values, the intermediate values, and the minimum values, respectively, of the phases of the input voltage VE and for supplying two modulated signals SHI and SLO obtained by modulating the triangular signal ST with respective combinations of the voltage signals VEmax, VEmid, and VEmin.

The aforesaid motor control system (not illustrated) regulates the frequency of the three-phase reference voltage VREF from a zero value to a maximum value equal to a fraction of the frequency of the triangular signal ST. In practice, in order to limit the distortion of the three-phase output voltage VL, the maximum value of the frequency of the reference voltage VREF is equal to one sixth of the frequency of the triangular signal ST.

The control device 7 further comprises a common-mode generator block 12, which processes the measured values of input voltages VEM, the measured values of load currents ILM, and the reference voltage VREF, together with the voltage signals VEmax and VEmid, to obtain a common-mode voltage component VCM, and an adder block 13 for adding the common-mode voltage component VCM to each of the phases of the reference voltage VREF and obtaining a three-phase reference voltage VREFC that incorporates the common-mode component.

The aforesaid motor control system (not illustrated) supplies the three-phase reference voltage VREF to the control device 7 in the form of a sequence of triads of voltage values temporally spaced apart with the same sampling period as that of the measured values VEM and ILM so as to enable processing of the triads of voltage values VREF with corresponding triads of measured values ILM and VEM.

According to a variant of the invention (not illustrated), the motor control system supplies the three-phase reference voltage VREF in analog form, and the control device 7 comprises a further measuring block for supplying measured values of the reference voltages in form of triads of sampled voltage values.

Finally, the control device 7 comprises a comparison and processing block 14 for obtaining nine "internal" control signals PWMI, which are of the pulse-width-modulated type and refer to the voltage signals VEmax, VEmid, and VEmin, on the basis of a comparison between each of the phases of the reference voltage VREFC and the modulated signals SHI and SLO, and a dynamic-mapping block 15 for generating the control signals PWM starting from the internal control signals PWMI as a function of a comparison between the values of the triad of measured values of input voltage VEM, and in particular as a function of a comparison between each of the values of the triad of measured values VEM and each of the voltage signals VEmax, VEmid, and VEmin.

With reference to Figure 4, the signal-conditioning block 11 comprises a sample-ordering block 16, which compares with one another the values of each triad of the measured values VEM to identify the maximum value, the minimum value, and the remaining intermediate value of said triad of values and generate the corresponding maximum-voltage signal VEmax, minimum-voltage signal VEmin, and intermediate-voltage signal VEmid, and a series of adder and multiplier blocks, designated as a whole by 17, configured for determining the signals SHI and SLO by modulating the unit triangular signal ST with the voltage signals VEmax, VEmid, and VEmin, according to the following formulas:

$$SHI = (VEmax - VEmid) \cdot ST + VEmid$$

$$SLO = (VEmin - VEmid) \cdot ST1 + VEmid$$

where ST1 is a signal in phase opposition with respect to the signal ST obtained via a phase-shifter block 18.

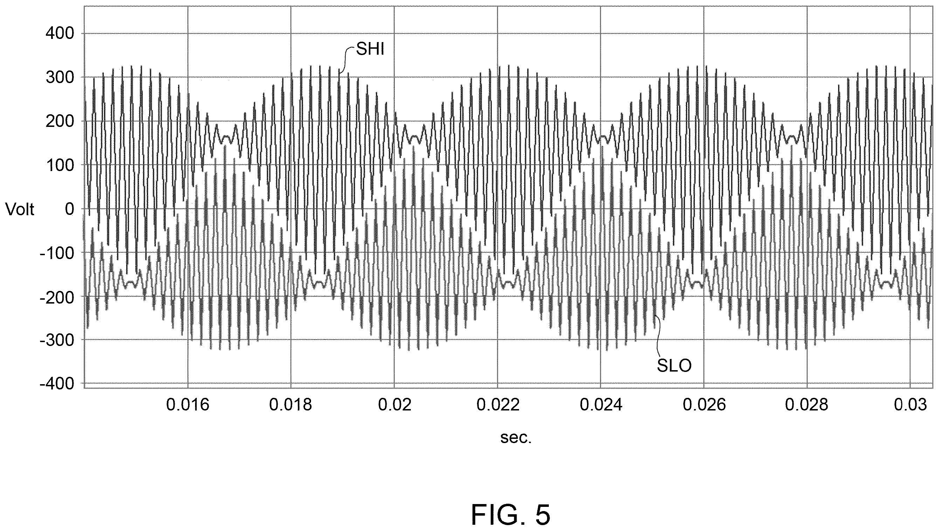

Figure 5 illustrates a simulation of the time plot of the signals SHI and SLO.

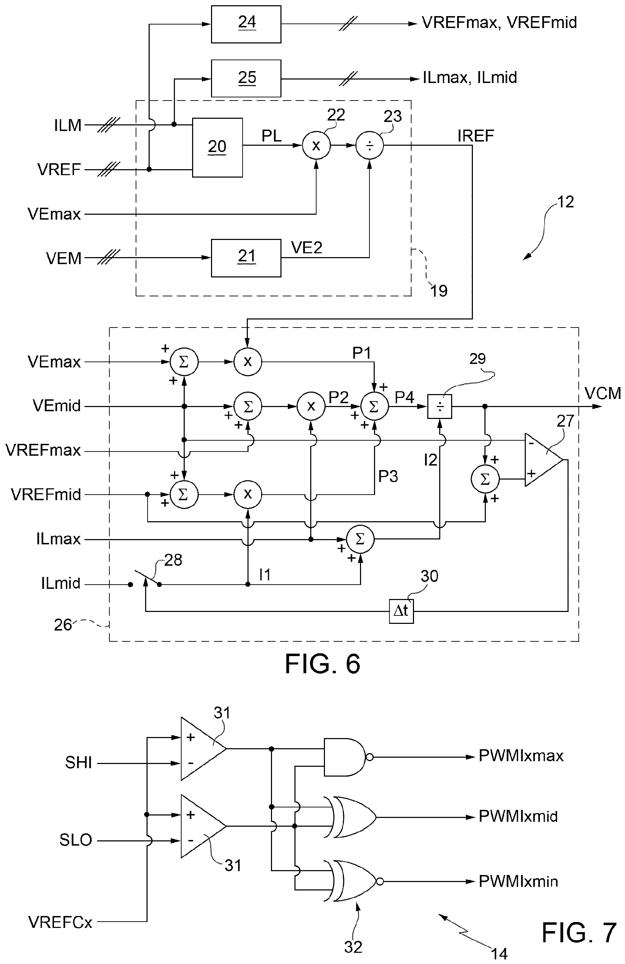

With reference to Figure 6, the common-mode generator block 12 comprises a current calculation block 19 for calculating a reference current IREF, which represents the quadratic-mean current supplied by the three-phase source 3, as a function of the measured values of load currents ILM, of the values of reference voltage VREF, and of the measured values of input phase voltages VEM. In particular, the current calculation block 19 comprises a load-power calculation block 20, which supplies the power absorbed by the load (motor 5), designated by PL, as a function of measured values ILM and of the reference-voltage values VREF, and a mean-square calculation block 21 for calculating the mean-square value VE2 of the three-phase input voltage starting from the measured values VEM. In greater detail, the load power PL is calculated according to the following formula:

$$PL = VREFuw \cdot ILMu + VREFvw \cdot ILMv$$

where VREFuw and VREFvw are the values of two concatenated reference voltages referring to one and the same phase (w) and calculated, in a known way, as a function of a corresponding triad of values of the reference voltage VREF, and where ILMu and ILMv are the values of the two load currents corresponding to the aforesaid concatenated voltages.

The reference current IREF is calculated according to the following formula:

$$IREF = PL \cdot VEmax/VE2$$

implemented through a multiplier block 22 and a divider block 23 that form part of the current calculation block 19.

The common-mode generator block 12 further comprises a first sample-ordering block 24, which compares with one another the values of each triad of values of the reference voltage VREF to identify at least the maximum value and the intermediate value of said triad of values and generate two corresponding signals of maximum voltage VREFmax and intermediate voltage VREFmid, and a second sample-ordering block 25, which compares with one another the values of each triad of the measured values ILM to supply at least the maximum value and the intermediate value of said triad of values and generate two corresponding signals of maximum current ILmax and intermediate current ILmid. Basically, the sample-ordering blocks 24 and 25 are similar to the sample-ordering block 16, with the difference that they act on triads of values of other quantities and supply only the corresponding maximum and intermediate values.

Finally, the common-mode generator block 12 comprises a common-mode voltage calculation block 26 for calculating the common-mode voltage VCM as a function of the VREFmax, VREFmid, ILmax, ILmid, VEmax, and VEmid signals, and of the reference current IREF via a network of adders and multipliers configured for supplying a series of intermediate results, in terms of power and current, which can be expressed by the following formulas:

$$P1 = (VEmid + VEmax) \cdot IREF$$

$$P2 = (VEmid + VREFmax) \cdot ILmax$$

$$P3 = (VEmid + VREFmid) \cdot I1$$

$$P4 = P1 + P2 + P3$$

$$I2 = ILmax + I1$$

where I1 is a current, the value of which is conditioned by the result of the comparison between the voltage signal VEmid and the sum of the common-mode voltage VCM and of the voltage signal VREFmid, said comparison being carried out via a comparator 27 forming part of the calculation block 26.

In particular, if (VCM + VREFmid) > VEmid, then I1 = ILmid; otherwise, I1 = 0.

In the example illustrated in Figure 6, the condition for determining the current I1 is implemented via a switch 28 controlled by the comparator 27 and forming part of the calculation block 26.

The common-mode voltage VCM is calculated by dividing the power P4 by the current I2 via a divider block 29 forming part of the calculation block 26.

The condition that determines the current I1 requires knowledge of the result, i.e., of the common-mode voltage VCM. In order for the calculation block 26 to function in real time, it comprises a delay block 30 set between the output of the comparator 27 and the switch 28.

According to an embodiment of the present invention (not illustrated), the output of the comparator 27 switches between two values substantially equal to 1 and 0 and, instead of the switch 28, the calculation block 26 comprises a multiplier, which multiplies the output of the comparator 27 by the signal ILmid.

With reference to Figure 7, the comparison and processing block 14 comprises, for each phase of the reference voltage VREFC, a pair of comparators 31 for comparing the phase of the reference voltage VREFC, designated by VREFCx in Figure 7, where x is the generic output phase u, v, w of the matrix converter 1, with each of the modulated signals SHI and SLO, and a logic network 32 for determining three internal control signals PWMI corresponding to the phase x, designated by PWMIxmax, PWMIxmid, and PWMIxmin in Figure 7, as a function of the logic outputs of the comparators 31. In particular, the control signal PWMIxmax refers to the voltage signal VEmax, the control signal PWMIxmid refers to the voltage signal VEmid, and the control signal PWMIxmin refers to the voltage signal VEmin.

Each of the nine control signals PWM is designated as a whole hereinafter by PWMyx, and each value of the triad of measured values of input voltage VEM is designated as a whole hereinafter by VEMy, where y and x are indices that represent, respectively, a generic input phase u, v, w and a generic output phase u, v, w of the matrix converter 1.

The dynamic-mapping block 15 is configured for determining each control signal PWMyx from the internal control signals PWMIxmax, PWMIxmid, and PWMIxmin as a function of the comparison between the values VEMy of the triad of measured values VEM according to the logic described hereinafter. If the measured value VEMy (input phase y) is greater than the values of the other input phases, i.e., basically if the value VEMy coincides with the value of the signal VEmax, then the signal PWMyx assumes the value of the signal PWMIxmax; otherwise, if the measured value VEMy is smaller than the values of the other input phases, i.e., basically if the value VEMy coincides with the value of the signal VEmin, then the signal PWMyx assumes the value of the signal PWMIxmin; otherwise, the signal PWMyx assumes the value of the signal PWMIxmid.

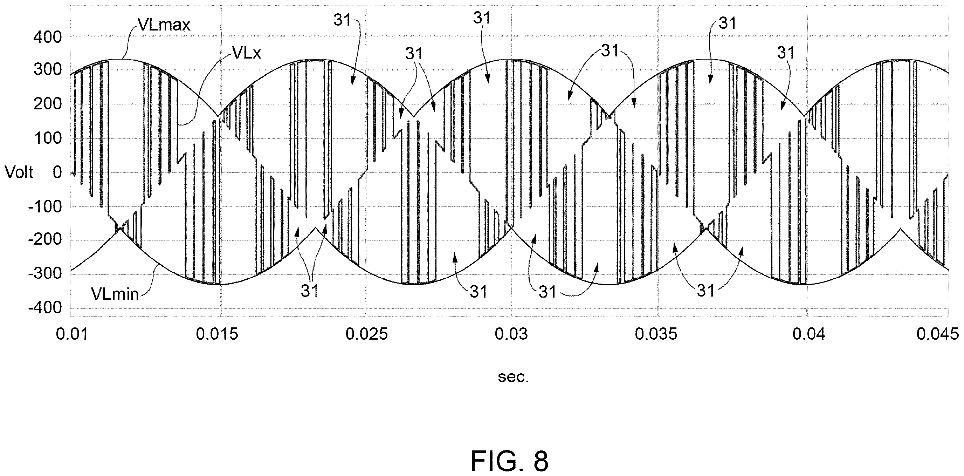

Figure 8 illustrates a simulation of the time plot of a (star) phase output voltage, designated by VLx, of the matrix converter 1, said time plot being comprised between the time plots of the maximum value, designated by VLmax, and of the minimum value, designated by VLmin. In this simulation, there may be noted vast areas comprised between the plots of the values VLmax and VLmin, some of which, enclosed in one period of the voltage VLx, are designated by 31, without any switching of the switching devices 6 and hence without any switching loss. With a matrix direct AC/AC converter of a traditional type, the entire region comprised between the time plots of the maximum value VLmax and of the minimum value VLmin would be full of switchings. In the example of Figure 8, the percentage of the areas 31 with respect to the total area comprised between the maximum value VLmax and the minimum value VLmin within one period of the signal VLx is approximately 50%, to which there corresponds the same reduction in switching loss.

## Claims

1. A matrix direct AC/AC converter comprising a three-phase input (2), which can be supplied with a three-phase input voltage (VE), a three-phase output (4), which can be applied to an electrical load (5), a plurality of electronic two-way switching devices (6), which are arranged so as to matrix-connect the terminals of the three-phase input (2) with the terminals of the three-phase output (4), and control means (7) for controlling the switching devices (6); said control means (7) being designed to receive a first reference voltage (VREF), which represents a desired three-phase voltage on the three-phase output (4), and said control means (7) comprising first processing means (12) for generating a common-mode voltage (VCM) and second processing means (13) for generating a second reference voltage (VREFC) by combining the first reference voltage (VREF) with the common-mode voltage (VCM); the matrix direct AC/AC converter being **characterized in that** said control means (7) comprise voltage and current measuring means (8, 9) for obtaining first measured values (VEM) corresponding to the three-phase input voltage (VE) and second measured values (ILM) corresponding to the three-phase load current (IL), and third processing means (16, 24, 25) for processing the first measured values (VEM) in such a way as to obtain a first signal (VEmax), a second signal (VEmid), and a third signal (VEmin), which represent maximum values, intermediate values, and minimum values, respectively, of the phases of the three-phase input voltage (VE), **in that** said first processing means (12) are designed to generate said common-mode voltage (VCM) as a function of the first reference voltage (VREF), of the first and second measured values (VEM, ILM) and of said first, second, and third signals (VEmax, VEmid, VEmin), and **in that** said control means (7) comprise fourth processing means (10, 17, 18, 14) for processing said first, second, and third signals (VEmax, VEmid, VEmin) and the second reference voltage (VREFC) in such a way as to obtain pulse-width-modulated internal control signals (PWMI), referring to said first, second, and third signals, and fifth processing means (15) for generating, starting from the internal control signals (PWMI) and as a function of a comparison between said first measured values (VEM), pulse-width-modulated external control signals (PWM), each of which is designed to control a respective two-way switch (6).

2. The matrix direct AC/AC converter according to Claim 1, wherein said first measured values (VEM) comprise first triads of measured values corresponding to the three phases of the three-phase input voltage (VE); said third processing means (16, 24, 25) comprising first value-ordering means (16) for identifying the maximum value, the minimum value, and the remaining intermediate value of each first triad of measured values and for generating the first signal (VEmax), the third signal (VEmin), and the second signal (VEmid), respectively, with the maximum value, the minimum value, and the intermediate value of each first triad of measured values.

3. The matrix direct AC/AC converter according to Claim 1 or 2, wherein said first processing means (12) comprise sixth processing means (19) for determining a reference current (IREF), which represents the quadratic-mean current absorbed by the three-phase input (2), as a function of the first reference voltage (VREF) and of the first and second measured values (VEM, ILM), and seventh processing means (26) for determining said common-mode voltage (VCM) as a function of the reference current (IREF), of the first reference voltage (VREF), of the first and second signals (VEmax, VEmid), and of part of the second measured values (ILmax, ILmid).

4. The matrix AC/AC converter according to Claim 3, wherein said sixth processing means (19) are configured for calculating a load power (PL) as a function of the first reference voltage (VREF) and of said second measured values (ILM), a mean-square value of the input voltage (VE2) as a function of said first measured values (VEM), an intermediate factor by multiplying the load power (PL) by said first signal (VEmax), and said reference current (IREF) by dividing said intermediate factor by said mean-square value (VE2).

5. The matrix direct AC/AC converter according to Claim 3 or 4, wherein said second measured values (ILM) comprise second triads of measured values corresponding to the three phases of the load current (IL), and said first reference voltage (VREF) is defined by a sequence of triads of voltage values; said third processing means (16, 24, 25) comprising second value-ordering means (24, 25) for identifying the maximum value and the intermediate value of each second triad of measured values and the maximum value and the intermediate value of each triad of voltage values and for generating a fourth signal (ILmax) and a fifth signal (ILmid), respectively, with the maximum value and with the intermediate value of each second triad of measured values, and a sixth signal (VREFmax) and a seventh signal (VREFmid), respectively, with the maximum value and with the intermediate value of each triad of voltage values; said seventh processing means (26) being configured for determining said common-mode voltage (VCM) as a function of said reference current (IREF) and of said first signal (VEmax), said second signal (VEmid), said fourth signal (ILmax), said fifth signal (ILmid), said sixth signal (VREFmax), and said seventh signal (VREFmid).

6. The matrix direct AC/AC converter according to any one of Claims 1 to 5, wherein said second processing means (13) are configured to obtain said second reference voltage (VREFC) by adding said common-mode voltage (VCM) to each phase of said first reference voltage (VREF).

7. The matrix direct AC/AC converter according to any one of Claims 1 to 6, wherein said fourth processing means (10, 17, 18, 14) comprise signal-generating means (10) for supplying an eighth signal (ST) with triangular waveform and a predetermined frequency, and eighth processing means (17, 18) for determining a ninth signal (SHI) and a tenth signal (SLO) by modulating the eighth signal (ST) with two respective combinations of said first, second, and third signals (VEmax, VEmid, VEmin).

8. The matrix direct AC/AC converter according to Claim 7, wherein said predetermined frequency of the eighth signal (ST) is greater than or equal to 2 kHz.

9. The matrix direct AC/AC converter according to Claim 7 or 8, wherein said ninth and tenth signals (SHI, SLO) are determined on the basis of the following formulas:

$$SHI = (VEmax - VEmid) \cdot ST + VEmid$$

$$SLO = (VEmin - VEmid) \cdot ST1 + VEmid$$

where ST is the eighth signal, ST1 is an eleventh signal obtained by phase-inversion of the eighth signal, and VEmax, VEmid, and VEmin are said first, second, and third signals, respectively.

10. The matrix direct AC/AC converter according to any one of Claims 7 to 9, wherein said fourth processing means (10, 17, 18, 14) comprise, for each output phase (x) of said three-phase output (4), a pair of comparators (31) for comparing the output phase of the second reference voltage (VREFCx) with each of said ninth and tenth signals (SHI, SLO), and a logic network (32) for generating, as a function of the logic outputs of the comparators (31), three of said internal control signals (PWNIxmax, PWMIxmid, PWMIxmin) corresponding to said output phase (x) and referring, respectively, to said first, second, and third signals (VEmax, VEmid, VEmin).

11. The matrix direct AC/AC converter according to Claim 10, wherein said first measured values (VEM) comprise first triads of measured values corresponding to the three phases of the three-phase input voltage (VE), and each of said external control signals (PWMyx) refers to a certain input phase (y) of said three-phase input (2) and to a certain output phase (x) of said phase output (4); said fifth processing means (15) being configured to define each external control signal (PWMyx) by selecting one of said internal control signals (PWNIxmax, PWMIxmid, PWMIxmin) corresponding to the output phase (x) as a function of a comparison between the values of each first triad of measured values.

## Patentansprüche

1. Matrix-Direkt-AC/AC-Konverter, umfassend einen dreiphasigen Eingang (2), welcher mit einer dreiphasigen Eingangsspannung (VE) versorgt werden kann, einen dreiphasigen Ausgang (4), der an eine elektrische Last (5) angelegt werden kann, eine Vielzahl elektronischer Zwei-Wege-Schaltgeräte (6), welche so angeordnet sind, dass sie die Anschlüsse des dreiphasigen Eingangs (2) mit den Anschlüssen des dreiphasigen Ausgangs (4) matrixartig verbinden, und Steuermittel (7), um die Schaltgeräte (6) zu steuern; wobei die Steuermittel ausgelegt sind, um eine erste Referenzspannung (VREF) zu erhalten, welche eine gewünschte dreiphasige Spannung an dem dreiphasigen Ausgang (4) darstellt, und die Steuermittel (7) erste Verarbeitungsmittel (12) zum Generieren einer Gleichtaktspannung (VCM) und zweite Verarbeitungsmittel (13) zum Generieren einer zweiten Referenzspannung (VREFC) durch Kombinieren der ersten Referenzspannung (VREF) mit der Gleichtaktspannung (VCM) umfassen; wobei der Matrix-Direkt-AC/AC-Konverter **dadurch gekennzeichnet ist, dass** die Steuermittel (7) Spannungs- und Strommessmittel (8, 9) umfassen, zum Erhalt erster Messwerte (VEM) entsprechend dem dreiphasigen Eingang (VE) und zweiter Messwerte (ILM) entsprechend dem dreiphasigen Laststrom (IL), und dritte Verarbeitungsmittel (16, 24, 25) zum Verarbeiten der ersten Messwerte (VEM), um ein erstes Signal (VEmax), ein zweites Signal (VEmid), und ein drittes Signal (VEmin) zu erhalten, welche entsprechend Maximumwerte, Zwischenwerte und Minimumwerte der Phasen der dreiphasigen Eingangsspannung (VE) darstellen, und dass die ersten Verarbeitungsmittel (12) ausgelegt sind, um die Gleichtaktspannung (VCM) als Funktion der ersten Referenzspannung (VREF), der ersten und zweiten Messwerte (VEM, ILM) und der ersten, zweiten und dritten Signale (VEmax, VEmid, VEmin) zu generieren, und dass die Steuermittel (7) vierte Verarbeitungsmittel (10, 17, 18, 14) umfassen, um die ersten, zweiten und dritten Signale (VEmax, VEmid, VEmin) und die zweite Referenzspannung (VREFC) zu verarbeiten, um pulsweitenmodulierte interne Steuersignale (PWMI) zu erhalten, bezogen auf die ersten, zweiten und dritten Signale, und fünfte Verarbeitungsmittel (15) zum Generieren, anfangend mit den internen Steuersignalen (PWMI) und als eine Funktion eines Vergleichs zwischen den ersten Messwerten (VEM), pulsweitenmodulierter externer Steuersignale (PWM), die jeweils zum Steuern eines entsprechenden Zwei-Wege-Schalters (6) ausgelegt sind.

2. Matrix-Direkt-AC/AC-Konverter, nach Anspruch 1, wobei die ersten Messwerte (VEM) erste Messwerttriaden umfassen, die den drei Phasen der dreiphasigen Eingangsspannung (VE) entsprechen; wobei die dritten Verarbeitungsmittel (16, 24, 25) erste Werteordnungsmittel (16) zum Identifizieren des Maximumwerts, des Minimumwerts und des übrigbleibenden Zwischenwerts jeder ersten Messwerttriade und zum Generieren des ersten Signals (VEmax), des dritten Signals (VEmin) und des zweiten Signals (VEmid), entsprechend mit dem Maximumwert, dem Minimumwert und dem Zwischenwert jeder ersten Messwerttriade umfassen.

3. Matrix-Direkt-AC/AC-Konverter nach Anspruch 1 oder 2, wobei die ersten Verarbeitungsmittel (12) sechste Verarbeitungsmittel (19) zum Bestimmen eines Referenzstroms (IREF) umfassen, welcher den quadratischen Mittelstrom darstellt, der vom dreiphasigen Eingang (2) absorbiert wird, als eine Funktion der ersten Referenzspannung (VREF) und der ersten und zweiten Messwerte (VEM, ILM), und siebte Verarbeitungsmittel (26) zum Bestimmen der Gleichtaktspannung (VCM) als eine Funktion des Referenzstroms (IREF), der ersten Referenzspannung (VREF), der ersten und zweiten Signale (VEmax, VEmid) und von einem Teil der zweiten Messwerte (ILmax, ILmid).

4. Matrix-Direkt-AC/AC-Konverter nach Anspruch 3, wobei die sechsten Verarbeitungsmittel (19) ausgebildet sind zum Berechnen einer Lastleistung (PL) als eine Funktion der ersten Referenzspannung (VREF) und der zweiten Messwerte (ILM), eines Mittelwertquadratwerts der Eingangsspannung (VE2) als eine Funktion der ersten Messwerte (VEM), eines Zwischenfaktors durch Multiplizieren der Lastleistung (PL) mit dem ersten Signal (VEmax), und des Referenzstroms (IREF) durch Dividieren des Zwischenfaktors durch den Mittelwertquadratwert (VE2).

5. Matrix-Direkt-AC/AC-Konverter nach Anspruch 3 oder 4, wobei die zweiten Messwerte (ILM) zweite Messwerttriaden umfassen entsprechend den drei Phasen des Laststroms (IL), wobei die erste Referenzspannung durch eine Reihe von Spannungswerttriaden definiert wird; wobei die dritten Verarbeitungsmittel (16, 24, 25) zweite Werteordnungsmittel (24, 25) zum Identifizieren des Maximumwerts und des Zwischenwerts einer jeden zweiten Messwerttriade und des Maximumwerts und des Zwischenwerts einer jeden Spannungswerttriade und zum Generieren eines vierten Signals (ILmax) und eines fünften Signals (ILmid), entsprechend mit dem Maxiumwert und dem Zwischenwert einer jeden zweiten Messwerttriade, und eines sechsten Signals (VREFmax) und eines siebten Signals (VREFmid), entsprechend mit dem Maximumwert und mit dem Zwischenwert einer jeden Spannungswerttriade umfassen; wobei die siebten Verarbeitungsmittel (26) zum Bestimmen der Gleichtaktspannung (VCM) als eine Funktion des Referenzstroms (IREF) und des ersten Signals (VEmax), des zweiten Signals (VEmid), des vierten Signals (ILmax), des fünften Signals (ILmid), des sechsten Signals (VREFmax) und des siebten Signals (VREFmid) ausgebildet sind.

6. Matrix-Direkt-AC/AC-Konverter nach einem der Ansprüche 1 bis 5, wobei die zweiten Verarbeitungsmittel (13) zum Erhalt der zweiten Referenzspannung (VREFC) durch Addieren der Gleichtaktspannung (VCM) zu jeder Phase der ersten Referenzspannung (VREF) ausgebildet sind.

7. Matrix-Direkt-AC/AC-Konverter nach einem der Ansprüche 1 bis 6, wobei die vierten Verarbeitungsmittel (10, 17, 18, 14) signalgenerierende Mittel (10) zum Bereitstellen eines achten Signals (ST) mit Dreieckswellenform und einer festgelegten Frequenz umfassen, und achte Verarbeitungsmittel (17, 18) zum Bestimmen eines neunten Signals (SHI) und eines zehnten Signals (SLO) durch Modulieren des achten Signals (ST) mit zwei entsprechenden Kombinationen der ersten, zweiten und dritten Signale (VEmax, VEmid, VEmin).

8. Matrix-Direkt-AC/AC-Konverter nach Anspruch 7, wobei die festgelegte Frequenz des achten Signals (ST) größer oder gleich 2 kHz ist.

9. Matrix-Direkt-AC/AC-Konverter nach Anspruch 7 oder 8, wobei die neunten und zehnten Signale (SHI, SLO) auf Basis der folgenden Gleichungen bestimmt werden:

$$SHI = (VEmax - VEmid) \cdot ST + VEmid$$

$$SLO = (VEmin - VEmid) \cdot ST1 + VEmid$$

wobei ST das achte Signal ist, ST1 ein durch Phasenumkehr des achten Signals erhaltenes elftes Signal ist und VEmax, VEmid und VEmin die jeweils ersten, zweiten und dritten Signale sind.

10. Matrix-Direkt-AC/AC-Konverter nach einem der Ansprüche 7 bis 9, wobei die vierten Verarbeitungsmittel (10, 17, 18, 14) für jede Ausgangsphase (x) des dreiphasigen Ausgangs (4) ein Paar von Komparatoren (31) zum Vergleich der Ausgangsphase der zweiten Referenzspannung (VREFCx) mit jedem der neunten und zehnten Signale (SHI, SLO) umfassen und ein Logik-Netzwerk (32) zum Generieren, als eine Funktion der Logikausgänge der Komparatoren (31), dreier der internen Steuersignale (PWNIxmax, PWMIxmid, PWMIxmin), die der Ausgangsphase (x) entsprechen und sich entsprechend auf die ersten, zweiten und dritten Signale (VEmax, VEmid, VEmin) beziehen.

**11.** Matrix-Direkt-AC/AC-Konverter nach Anspruch 10, wobei die ersten Messwerte (VEM) erste Messwerttriaden umfassen, die den drei Phasen der dreiphasigen Eingangsspannung (VE) entsprechen, und jedes der ersten externen Steuersignale (PWMyx) sich auf eine bestimmte Eingangsphase (y) des dreiphasigen Eingangs (2) und einer bestimmten Ausgangsphase (x) des Phasenausgangs (4) bezieht; wobei die fünften Verarbeitungsmittel (15) zum Bestimmen jedes der externen Steuersignale (PWMyx) durch Auswählen eines der internen Steuersignale (PWMIxmax, PWMIxmid, PWMIxmin), die der Ausgangsphase (x) als eine Funktion eines Vergleichs zwischen den Werten jeder ersten Messwerttriade entsprechen, ausgebildet sind.

## Revendications

**1.** Convertisseur courant alternatif/courant alternatif - AC/AC - direct à matrice comprenant une entrée triphasée (2), laquelle peut être alimentée au moyen d'une tension d'entrée triphasée (VE), une sortie triphasée (4), laquelle peut être appliquée sur une charge électrique (5), une pluralité de dispositifs de commutation bidirectionnelle électroniques (6), lesquels sont agencés de manière à connecter en matrice les bornes de l'entrée triphasée (2) avec les bornes de la sortie triphasée (4), et un moyen de commande (7) pour commander les dispositifs de commutation bidirectionnelle électroniques (6) ; ledit moyen de commande (7) étant conçu pour recevoir une première tension de référence (VREF), laquelle représente une tension triphasée souhaitée sur la sortie triphasée (4), et ledit moyen de commande (7) comprenant un premier moyen de traitement (12) pour générer une tension de mode commun (VCM) et un deuxième moyen de traitement (13) pour générer une seconde tension de référence (VREFC) en combinant la première tension de référence (VREF) avec la tension de mode commun (VCM) ; le convertisseur courant alternatif/courant alternatif - AC/AC - direct à matrice étant **caractérisé en ce que** ledit moyen de commande (7) comprend un moyen de mesure de tension et de courant (8, 9) pour obtenir des premières valeurs mesurées (VEM) qui correspondent à la tension d'entrée triphasée (VE) et des secondes valeurs mesurées (ILM) qui correspondent au courant de charge triphasé (IL), et un troisième moyen de traitement (16, 24, 25) pour traiter les premières valeurs mesurées (VEM) de manière à obtenir un premier signal (VEmax), un deuxième signal (VEmid) et un troisième signal (VEmin), lesquels signaux représentent respectivement des valeurs maximum, des valeurs intermédiaires et des valeurs minimum des phases de la tension d'entrée triphasée (VE), **en ce que** ledit premier moyen de traitement (12) est conçu pour générer ladite tension de mode commun (VCM) en fonction de la première tension de référence (VREF), des premières et secondes valeurs mesurées (VEM, ILM) et desdits premier, deuxième et troisième signaux (VEmax, VEmid, VEmin), et **en ce que** ledit moyen de commande (7) comprend un quatrième moyen de traitement (10, 17, 18, 14) pour traiter lesdits premier, deuxième et troisième signaux (VEmax, VEmid, VEmin) et la seconde tension de référence (VREFC) de manière à obtenir des signaux de commande internes modulés en largeur d'impulsion (PWMI), en se référant auxdits premier, deuxième et troisième signaux, et un cinquième moyen de traitement (15) pour générer, en partant des signaux de commande internes (PWMI) et en fonction d'une comparaison entre lesdites premières valeurs mesurées (VEM), des signaux de commande externes modulés en largeur d'impulsion (PWM), dont chacun est conçu pour commander un commutateur bidirectionnel respectif (6).

**2.** Convertisseur courant alternatif/courant alternatif - AC/AC - direct à matrice selon la revendication 1, dans lequel lesdites premières valeurs mesurées (VEM) comprennent des premières triades de valeurs mesurées qui correspondent aux trois phases de la tension d'entrée triphasée (VE) ; ledit troisième moyen de traitement (16, 24, 25) comprenant un premier moyen de classement de valeurs (16) pour identifier la valeur maximum, la valeur minimum et la valeur intermédiaire restante de chaque première triade de valeurs mesurées et pour générer respectivement le premier signal (VEmax), le troisième signal (VEmin) et le deuxième signal (VEmid) avec la valeur maximum, la valeur minimum et la valeur intermédiaire de chaque première triade de valeurs mesurées.

**3.** Convertisseur courant alternatif/courant alternatif - AC/AC - direct à matrice selon la revendication 1 ou 2, dans lequel ledit premier moyen de traitement (12) comprend un sixième moyen de traitement (19) pour déterminer un courant de référence (IREF), lequel représente le courant moyen quadratique qui est absorbé par l'entrée triphasée (2), en fonction de la première tension de référence (VREF) et des premières et secondes valeurs mesurées (VEM, ILM), et un septième moyen de traitement (26) pour déterminer ladite tension de mode commun (VCM) en fonction du courant de référence (IREF), de la première tension de référence (VREF), des premier et deuxième signaux (VEmax, VEmid) et d'une partie des secondes valeurs mesurées (ILmax, ILmid).

**4.** Convertisseur courant alternatif/courant alternatif - AC/AC - direct à matrice selon la revendication 3, dans lequel ledit sixième moyen de traitement (19) est configuré pour calculer une puissance de charge (PL) en fonction de la première tension de référence (VREF) et desdites secondes valeurs mesurées (ILM), une valeur quadratique moyenne (VE2) de la tension d'entrée en fonction desdites premières valeurs mesurées (VEM), un facteur intermédiaire en multipliant la puissance de charge (PL) par ledit premier signal (VEmax), et ledit courant de référence (IREF) en divisant ledit facteur intermédiaire par ladite valeur quadratique moyenne (VE2).

5. Convertisseur courant alternatif/courant alternatif - AC/AC - direct à matrice selon la revendication 3 ou 4, dans lequel lesdites secondes valeurs mesurées (ILM) comprennent des secondes triades de valeurs mesurées qui correspondent aux trois phases du courant de charge (IL), et ladite première tension de référence (VREF) est définie par une séquence de triades de valeurs de tension ; ledit troisième moyen de traitement (16, 24, 25) comprenant un second moyen de classement de valeurs (24, 25) pour identifier la valeur maximum et la valeur intermédiaire de chaque seconde triade de valeurs mesurées ainsi que la valeur maximum et la valeur intermédiaire de chaque triade de valeurs de tension et pour générer respectivement un quatrième signal (ILmax) et un cinquième signal (ILmid) avec la valeur maximum et avec la valeur intermédiaire de chaque seconde triade de valeurs mesurées, et respectivement un sixième signal (VREFmax) et un septième signal (VREFmid) avec la valeur maximum et avec la valeur intermédiaire de chaque triade de valeurs de tension ; ledit septième moyen de traitement (26) étant configuré pour déterminer ladite tension de mode commun (VCM) en fonction dudit courant de référence (IREF) et dudit premier signal (VEmax), dudit deuxième signal (VEmid), dudit quatrième signal (ILmax), dudit cinquième signal (ILmid), dudit sixième signal (VREFmax) et dudit septième signal (VREFmid).

6. Convertisseur courant alternatif/courant alternatif - AC/AC - direct à matrice selon l'une quelconque des revendications 1 à 5, dans lequel ledit deuxième moyen de traitement (13) est configuré pour obtenir ladite seconde tension de référence (VREFC) en additionnant ladite tension de mode commun (VCM) à chaque phase de ladite première tension de référence (VREF).

7. Convertisseur courant alternatif/courant alternatif - AC/AC - direct à matrice selon l'une quelconque des revendications 1 à 6, dans lequel ledit quatrième moyen de traitement (10, 17, 18, 14) comprend un moyen de génération de signal (10) pour alimenter un huitième signal (ST) qui présente une forme d'onde triangulaire et une fréquence prédéterminée, et un huitième moyen de traitement (17, 18) pour déterminer un neuvième signal (SHI) et un dixième signal (SLO) en modulant le huitième signal (ST) avec deux combinaisons respectives desdits premier, deuxième et troisième signaux (VEmax, VEmid, VEmin).

8. Convertisseur courant alternatif/courant alternatif - AC/AC - direct à matrice selon la revendication 7, dans lequel ladite fréquence prédéterminée du huitième signal (ST) est supérieure ou égale à 2 kHz.

9. Convertisseur courant alternatif/courant alternatif - AC/AC - direct à matrice selon la revendication 7 ou 8, dans lequel lesdits neuvième et dixième signaux (SHI, SLO) sont déterminés sur la base des formules qui suivent :

$$SHI = (VEmax - VEmid) \cdot ST + VEmid$$

$$SLO = (VEmin - VEmid) \cdot ST1 + VEmid$$

dans lesquelles ST est le huitième signal, ST1 est un onzième signal qui est obtenu par inversion de la phase du huitième signal, et VEmax, VEmid et VEmin sont respectivement lesdits premier, deuxième et troisième signaux.

10. Convertisseur courant alternatif/courant alternatif - AC/AC - direct à matrice selon l'une quelconque des revendications 7 à 9, dans lequel ledit quatrième moyen de traitement (10, 17, 18, 14) comprend, pour chaque phase de sortie (x) de ladite sortie triphasée (4), une paire de comparateurs (31) pour comparer la phase de sortie de la seconde tension de référence (VREFCx) avec chacun desdits neuvième et dixième signaux (SHI, SLO), et un réseau logique (32) pour générer, en fonction des sorties logiques des comparateurs (31), trois desdits signaux de commande internes (PWNIxmax, PWMIxmid, PWMIxmin) qui correspondent à ladite phase de sortie (x) et par référence respectivement auxdits premier, deuxième et troisième signaux (VEmax, VEmid, VEmin).

11. Convertisseur courant alternatif/courant alternatif - AC/AC - direct à matrice selon la revendication 10, dans lequel lesdites premières valeurs mesurées (VEM) comprennent des premières triades de valeurs mesurées qui correspondent aux trois phases de la tension d'entrée triphasée (VE), et chacun desdits signaux de commande externes (PWMyx) se réfère à une certaine phase d'entrée (y) de ladite entrée triphasée (2) et à une certaine phase de sortie (x) de ladite sortie triphasée (4) ; ledit cinquième moyen de traitement (15) étant configuré pour définir chaque signal de commande externe (PWMyx) en sélectionnant celui desdits signaux de commande internes (PWNIxmax, PWMIxmid, PWMIxmin) qui correspond à la phase de sortie (x) en fonction d'une comparaison entre les valeurs de chaque première triade de valeurs mesurées.

FIG. 1

FIG. 2

FIG. 3

FIG. 4

FIG. 5

EP 3 285 386 B1

FIG. 6

FIG. 7

FIG. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 146032 B1

- US 4833588 A

**Non-patent literature cited in the description**

- **WILLIAM SHEPHERD et al.** Power Converter Circuits. Marcel Dekker Inc, 2004
- **JUN-KOO KANG et al.** Commond-Mode Voltage Characteristics of Matrix Converter-Driven AC Machines. *Conference record of the 2005 IEEE Industry Applications Conference Fortieth IAS Annual Meeting*

- **YOUNG-DOO YOON et al.** Carrier-Based Modulation Technique for Matrix Converter. *IEEE TRANSACTIONS ON POWER ELECTRONICS,* 2006, vol. 21 (6